# EUROPÄISCHE PATENTSCHRIFT

(11) **EP 0 827 671 B1**
(45) Veröffentlichungstag und Bekanntmachung des Hinweises auf die Patenterteilung: **18.11.1998**
(21) Anmeldenummer: 96919528.8
(22) Anmeldetag: 03.05.1996
(51) Int. Cl.: H04N 7/26

(54) **VERFAHREN ZUR KODIERUNG VON BILDERSEQUENZEN IN EINER SENDEEINHEIT**
PROCESS FOR CODING IMAGE SEQUENCES IN A TRANSMITTER UNIT
PROCEDE DE CODAGE DE SEQUENCES D'IMAGES DANS UNE UNITE EMETTRICE

(30) Priorität: 22.05.1995 DE 19518705
(43) Veröffentlichungstag der Anmeldung: 11.03.1998
(73) Patentinhaber: SIEMENS AKTIENGESELLSCHAFT, 80333 München (DE)
(72) Erfinder: RIEGEL, Thomas, D-81739 München (DE)
(86) Internationale Anmeldenummer: DE9600782
(87) Internationale Veröffentlichungsnummer: WO9638005

(56) Entgegenhaltungen:
- EP-A- 0 568 356
- CODING OF COMBINED NATURAL AND COMPUTER RENDERED IMAGE SEQUENCES, AMSTERDAM, THE NETHERLANDS, 20-23 MARCH 1995, PROC. SPIE - INT. SOC. OPT. ENG. (USA), PROCEEDINGS OF THE SPIE - THE INTERNATIONAL SOCIETY FOR OPTICAL ENGINEERING, 1995, USA, Bd. 2451, Seiten 207-211, XP000600748 RIEGEL T.: "Coding of combined natural and computer rendered image sequences"
- FERNSEH UND KINOTECHNIK, Bd. 47, Nr. 1, 1.Januar 1993, Seiten 33-42, XP000329675 HARTWIG S ET AL: "DIGITALE BILDCODIERUNG (TEIL 12)"
- PLENARY, SPECIAL, AUDIO, UNDERWATER ACOUSTICS, VLSI, NEURAL NETWORK, MINNEAPOLIS, APR. 27 - 30, 1993, Bd. 1 OF 5, 27.April 1993, INSTITUTE OF ELECTRICAL AND ELECTRONICS ENGINEERS, Seiten 99-102, XP000398326 MUSMANN H G: "OBJECT-ORIENTED ANALYSIS-SYNTHESIS CODING BASED ON SOURCE MODELS OF MOVING 2D- AND 3D-OBJECTS"

## Beschreibung

Bei der Kodierung von Bildersequenzen, die eine Kombination aus Computerbildteilen, z.B. aus Bildteilen, die aus Computergraphiken aufgebaut werden, und pixelbasierten Bildteilen, z.B. Bildteile, die von einer Kamera aufgenommen werden, darstellen, ist es bekannt, die Eingangsdaten der Computergraphiken (Scriptfiles mit assoziierten Daten) und die pixelbasierten Bildteile getrennt zu kodieren und zu übertragen. Erst beim Empfänger werden dann die Graphikmodelle gerendert und mit den pixelbasierten Bildteilen gemischt. Da das Mischen keine binäre Operation ist, muß für jedes Pixel die Information, in welchem Verhältnis gemischt werden soll, zusätzlich übertragen werden. Diese Information ist in einem Key-Signal gespeichert und wird beim traditionellen Fernsehen durch eine Farbsegmentierung aus dem Kamerasignal gewonnen (F. Fechter et. al., "Signal processing for a digital HDTV chromakey mixer", Signal Processing: Image Communication 5, 1993, S. 417 - 423) und (T. Sprague, ,,Merging Digital Technology into an Analog World", SMPTE Journal, Feb. 1994, Vol. 103, No. 2, 1994, S. 100 - 104).

Verfahren, die Computerbildteile und pixelbasierte Bildteile getrennt in einer Sendeeinheit kodieren, diese zusammen mit einem sog. Key-Signal, das angibt, in welchem Verhältnis jeweils ein Pixel eines Computerbildteils mit dem entsprechenden Pixel des pixelbasierten Bildteils zusammengemischt werden soll, zu übertragen, sind bekannt. Bei Blue-Box-Aufnahmen z.B. wird das Key-Signal durch eine Farbsegmentierung aus den pixelbasierten Bilderteilen gewonnen. Dabei gibt die Stärke der Blaufärbung das spätere Mischungsverhältnis an, in dem in der Empfängereinheit die Pixelinformation des Pixels des Computerbildteils mit der entsprechenden Pixelinformation des pixelbasierten Bildteils zusammengemischt werden. Das Mischen der beiden Pixelinformationen in der Empfängereinheit ist ein nicht binäres Mischen.

Da die Mischung nicht binär ist, muß viel Information für das jeweilige Mischungsverhältnis zu jedem Punkt mit Hilfe des Key-Signals übertragen werden. Damit benötigt das Key-Signal eine erhebliche Menge an Übertragungskapazität. Die Information des Key-Signals besitzt aber keinen zusätzlichen Informationsgehalt für das Bild selbst, sondern nur die Information, in welchem Verhältnis die Bilder in der Empfängereinheit zusammengemischt werden sollen.

Der Erfindung liegt das Problem zugrunde, Bildersequenzen, bestehend aus Computerbildteilen und pixelbasierten Bildteilen, in einer Sendeeinheit bereits geeignet teilweise zu mischen und zu kodieren und dabei die Übertragung des normalerweise zusätzlich benötigten Key-Signals einzusparen.

Dieses Problem wird durch das Verfahren gemäß Patentanspruch 1 gelöst.

Das erfindungsgemäße Verfahren beschreibt eine Möglichkeit, die pixelbasierten Bildteile von Bildersequenzen vor der Kodierung abhängig von dem Key-Signal zu modifizieren, um sie anschließend effizient mit blockbasierten Kodern (z.B. MPEC1 oder MPEC2, usw.) komprimieren zu können und sie in der Empfängereinheit einfach binär mischen zu können. Dadurch kann auf das Key-Signal, das die Information des Mischverhältnisses der Computerbildteile mit den pixelbasierten Bildteilen enthält, erheblich verzichtet werden.

Das erfindungsgemäße Verfahren besitzt gegenüber bekannten Verfahren vor allem den Vorteil, daß das bei bekannten Verfahren erhebliche Übertragungskapazität benötigende Key-Signal reduziert wird, und damit die benötigte Übertragungskapazität verringert wird.

Eine Weiterbildung des Verfahrens gemäß Patentanspruch 2 birgt vor allem den Vorteil in sich, daß bei Verwendung von blockbasierten Kodern (z.B. MPEG1, MPEG2, usw.) die Bildersequenz effizienter kodiert werden kann.

Dadurch, daß in der Empfängereinheit die beiden Bildteile binär abhängig von dem Key-Signal zusammengemischt werden können, kann die Empfängereinheit wesentlich einfacher gestaltet werden.

Weiterbildungen der Erfindung ergeben sich aus den abhängigen Ansprüchen.

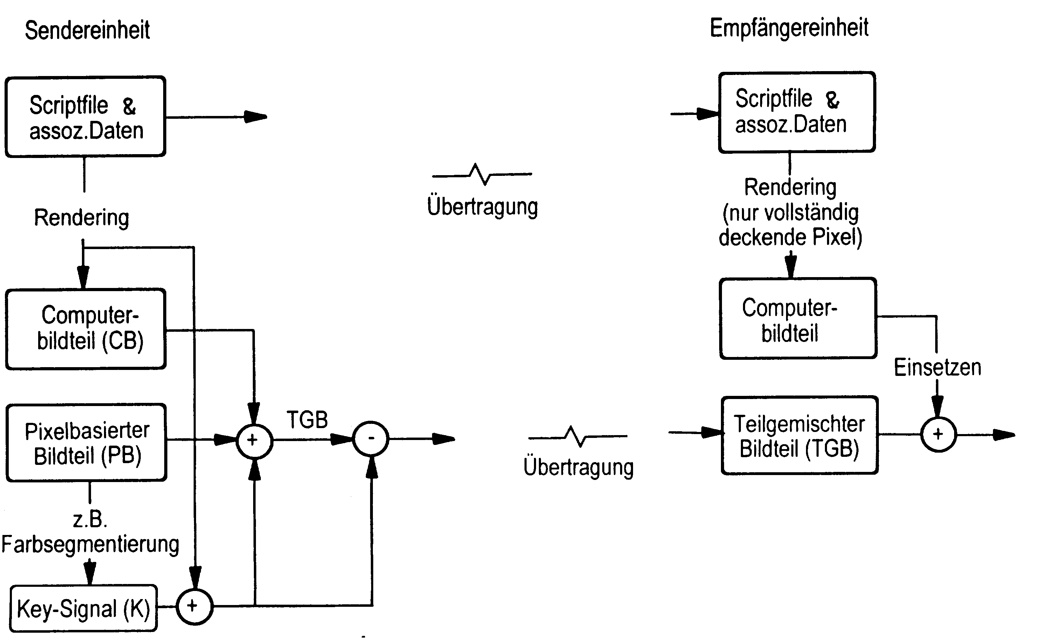

Ein Ausführungsbeispiel der Erfindung ist in Figur 1 dargestellt und wird im folgenden näher beschrieben.

Es zeigt Figur 1 ein Blockschaltbild, das das erfindungsgemäße Verfahren darstellt.

Anhand Figur 1 wird das erfindungsgemäße Verfahren weiter erläutert.

Bei sog. Blue-Box-Aufnahmen wird durch einen Anteil der Farbe Blau eines Pixels (Blauanteil) festgelegt, wie ein pixelbasierter Bildteil PB mit einem Computerbildteil CB zusammengemischt werden soll. In diesem Zusammenhang ist unter dem Computerbildteil CB z.B. eine Computergraphik zu verstehen. Aufgrund des reinen Blauanteils des jeweiligen Pixels im pixelbasierten Bildteil PB wird entschieden, ob und in welchem Maß ein ensprechendes Pixel des Computerbildteils CB eingefügt wird. Dabei gibt die Stärke der Blaufärbung das spätere Mischungsverhältnis der Pixelinformation des Pixels des pixelbasierten Bildteils PB und des entsprechenden Pixels des Computerbildteils CB an. Ist ein Pixel des pixelbasierten Bildteils PB nicht blau eingefärbt, so bleibt es unberührt, d.h. das Pixel des pixelbasierten Bildteils PB wird nicht mit dem entsprechenden Pixel des Computerbildteils CB verschmolzen.

Für das Computerbildteil CB ist zusätzlich bei Computer-Modellen durch die Materialeigenschaften angegeben, ob Flächen des Computer-Modells transparent sind. Ebenso ist der Grad der Transparenz als Computer-Modellattribut gespeichert. Auch die Koordinaten, in denen die Computer-Modelle in das pixelbasierte Bildteil PB eingefügt werden sollen, sind angegeben. Die Berechnung von Beleuchtungseffekten (Schatten, Spiegelungen usw.) erfolgt separat. Dadurch kann beim sog. Rendering entschieden werden, welche Pixel des Bildes zu verschatten oder aufzuhellen sind. Diese Information fließt jeweils in das jeweils betroffene Pixel ein, so daß diese Information auch bei der Verschmelzung der Pixel des pixelbasierten Bildteils PB und des entsprechenden Pixels des Computerbildteils CB mit einfließt.

Bei der Berechnung eines Key-Signals K werden zunächst all diejenigen Flächen, die beim Rendering der Computer-Modelle transparent, verschattet oder aufgehellt dargestellt werden müssen, zusätzlich auch in das Key-Signal K in Form von Pixelflächen geschrieben. Dabei wird der Grad der Transparenz sowie eventuell auch Beleuchtungseffekte mit angegeben, die als Grauwerte kodiert werden. Anschließend werden noch diejenigen Pixel, die im pixelbasierten Bildteil PB blau eingefärbt sind, entsprechend ihrer Blauintensität zum Key-Signal K geeignet hinzuaddiert.

Anhand des im vorigen beschriebenen Vorgehens erhält man das Key-Signal K, mit dessen Hilfe die Sendeeinheit leicht entscheiden kann, ob ein vorgegebenes Pixel gemischt werden muß oder nicht. Die Entscheidung in der Sendeeinheit kann z.B. nach folgenden Regeln getroffen werden: Ist das korrespondierende Pixel im Key-Signal K weiß, so wird das korrespondierende Pixel aus dem Computerbildteil CB in eine teilweise gemischte Bildersequenz TGB eingefügt.

Die teilweise gemischte Bildersequenz TGB bezeichnet in diesem Zusammenhang eine Bildersequenz mit Bildern, deren Pixelinformation verschmolzen wurde mit den Pixeln aus dem Computerbildteil CB und den korrespondierenden Pixeln aus dem pixelbasierten Bildteil PB.

Ist das korrespondierende Pixel im Key-Signal K schwarz, so wird das korrespondierende Pixel aus dem pixelbasierten Bildteil PB in die teilweise gemischte Bildersequenz TGB eingefügt.

Weist das korrespondierende Pixel im Key-Signal K eine andere Helligkeit für das jeweilige Pixel auf, so wird die Farbinformation des Pixels aus der in dem Computerbildteil CB enthaltenen Information und der Farbinformation des korrespondierenden Pixels aus dem pixelbasierten Bildteil zusammengemischt. Diese Situation entsteht z. B. bei Schatten von Objekten des Computerbildteils CB auf Bereiche des pixelbasierten Bildteils, wodurch die Farbinformation der Pixel des Bereichs, auf die der Schatten des jeweiligen Objekts "fällt", verändert wird.

Das Mischungsverhältnis ist in dem Key-Signal K angegeben und wird in der Sendeeinheit in einer für den Fachmann bekannten Weise berechnet.

Nachdem die teilweise gemischte Bildersequenz TGB nach der im vorigen beschriebenen Weise gebildet wurde, werden Bereiche, die vollständig von Bereichen des Computerbildteils CB verdeckt werden, vor der Codierung der teilweise gemischten Bildersequenz TGB ausgeblendet. Die Information, ob ein Bereich des Computerbildteils CB einen Bereich der teilweise gemischten Bildersequenz TGB völlig verdeckt, ist in einem Attribut der 3D-Modelle des Computerbildteils CB enthalten.

Anschließend wird die symbolische Beschreibung des Computerbildteils CB, d. h. ein Scriptfile und assoziierte Daten und die teilweise gemischte Bildersequenz TGB codiert und an eine Empfängereinheit übertragen.

In der Empfängereinheit werden nun nur noch die vollständig deckenden Bereiche des Computerbildteils CB gerendert und in die teilweise gemischte Bildersequenz TGB eingesetzt, wie sie in den Attributen des Computerbildteils CB angegeben werden, z. B. der Ort des einzusetzenden Objekts des Computerbildteils CB innerhalb der teilweise gemischten Bildersequenz TGB.

Eine weitere Berechnung z. B. von Schatten der einzusetzenden Objekte ist in der Empfängereinheit nicht mehr nötig, da diese schon in der Sendeeinheit durchgeführt wurden. Somit bleibt in der Empfängereinheit nur noch ein rein binäres Mischen. Die Übertragung des Key-Signals K entfällt.

Bei Verwendung von blockbasierten Kodern (z. B. MPEG1, MPEG2, usw.) ist es vorteilhaft, in der teilweise gemischten Bildersequenz TGB Bereiche von der Blockgröße-des Koders, die vollständig von Pixeln des Computerbildteils CB überdeckt werden, auf einen konstanten Wert zu setzen. Damit wird die Kodierung bei blockbasierten Kodern erheblich effizienter gestaltet.

Eine eventuell vorgesehene Nachbearbeitung der Bildersequenzen, z. B. ein Anti-aliasing zur Kantenglättung der dekodierten restlichen Computerbildsequenzen CBR, wird erst auf der Empfängerseite durchgeführt.

## Patentansprüche

1. Verfahren zur Codierung und Decodierung von Bildersequenzen unter Verwendung von Computerbildteilen (CB) und pixelbasierten Bildteilen (PB) anhand eines Key-Signals (K),
- bei dem in einer Sendeeinheit Pixelinformation eines Pixels des Computerbildteils (CB) mit Pixelinformation eines korrespondierenden Pixels des pixelbasierten Bildteils (PB) abhängig von dem Key-Signal (K) zu einer teilweise gemischten Bildersequenz (TGB) zusammengemischt wird,
- bei dem die teilweise gemischte Bildersequenz (TGB) und die Computerbildteile (CB) von der Sendeeinheit zu einer Empfängereinheit übertragen werden,
- bei dem nur vollständig deckende Bereiche des Computerbildteils (CB) in der Empfängereinheit gerendert werden, und
- bei dem die vollständig deckenden Bereiche des Computerbildteils (CB) in vorgegebene Bereiche der teilweise gemischten Bildersequenz (TGB) eingesetzt werden.

2. Verfahren nach Anspruch 1,
bei dem Bereiche der teilweise gemischten Bildersequenz (TGB) vor der Codierung ausgeblendet werden, die vollständig von Pixeln der Computerbildteile (CB) verdeckt werden.

3. Verfahren nach Ansprcuh 1 oder 2,
bei dem Bereiche in der teilweise gemischten Bildersequenz (TGB) von der Blockgröße des Koders, die vollständig von den Computerbildteilen (CB) überdeckt werden, einen konstanten Luminanzwert zugewiesen bekommen.

## Claims

1. Process for coding and decoding image sequences using computer image sections (CB) and pixel-based image sections (PB) with the use of a key signal (K),
- in which, in a transmitter unit, pixel information of a pixel of the computer image section (CB) is mixed together with pixel information of a corresponding pixel of the pixel-based image section (PB), in a manner dependent on the key signal (K) to form a partially mixed image sequence (TGB),
- in which the partially mixed image sequence (TGB) and the computer image sections (CB) are transmitted from the transmitter unit to a receiver unit,
- in which only completely congruent regions of the computer image section (CB) are rendered in the receiver unit, and
- in which the completely congruent regions of the computer image section (CB) are inserted into predetermined regions of the partially mixed image sequence (TGB).

2. Process according to Claim 1,
in which regions of the partially mixed image sequence (TGB) which are completely masked by pixels of the computer image sections (CB) are blanked prior to coding.

3. Process according to Claim 1 or 2,
in which regions in the partially mixed image sequence (TGB) of the block size of the coder which are completely covered by the computer image sections (CB) are allocated a constant luminance value.

## Revendications

1. Procédé de codage et de décodage de séquences d'images utilisant des parties d'images informatisées (CB) et des parties d'images à base de pixels (PB) au moyen d'un signal-clé (K),
- dans lequel, dans une unité émettrice, l'information sur l'image contenue dans un pixel de la partie d'image informatisée (CB) est mélangée avec l'information sur l'image contenue dans un pixel correspondant de la partie d'image à base de pixels (PB) en fonction du signal-clé (K), de manière à obtenir une séquence d'images partiellement mélangées (TGB),
- dans lequel la séquence d'images partiellement mélangées (TGB) et les parties d'images informatisées (CB) sont transmises de l'unité émettrice à une unité réceptrice,
- dans lequel seules les zones de la partie d'image informatisée (CB) qui sont complètement couvrantes sont restituées dans l'unité réceptrice, et
- dans lequel les zones de la partie d'image informatisée (CB) qui sont complètement couvrantes sont insérées dans des zones prédéterminées de la séquence d'images partiellement mélangées (TGB).

2. Procédé selon la revendication 1, dans lequel les zones de la séquence d'images partiellement mélangées (TGB) qui sont complètement recouvertes par des pixels des parties d'image informatisées (CB) sont extraites avant le codage.

3. Procédé selon l'une des revendications 1 ou 2, dans lequel on attribue une valeur de luminance constante à des zones de la séquence d'images partiellement mélangées (TGB) de la grandeur des blocs du codeur qui sont complètement recouvertes par les parties d'images informatisées (CB).
